(19)

**Europäisches Patentamt**
**European Patent Office**
**Office européen des brevets**

(11) **EP 2 843 872 A1**

(12) **EUROPÄISCHE PATENTANMELDUNG**

(43) Veröffentlichungstag:
04.03.2015 Patentblatt 2015/10

(51) Int Cl.:
*H04L 9/08* (2006.01)  *G07B 15/00* (2011.01)
*H04L 9/30* (2006.01)  *H04L 9/32* (2006.01)

(21) Anmeldenummer: **14178390.2**

(22) Anmeldetag: **24.07.2014**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **26.08.2013   CH 14462013**

(71) Anmelder: **Albis Technologies AG
8047 Zürich (CH)**

(72) Erfinder:
• **Kälin, August
8906 Bonstetten (CH)**

• **Mühlemann, Martin
8400 Winterthur (CH)**
• **Schüller, Samuel
8355 Aadorf (CH)**
• **Vultier, Yvo
8048 Zürich (CH)**
• **Wenger, Bruno
8804 Au/ZH (CH)**

(74) Vertreter: **Kley, Hansjörg
Aeckerwiesenstrasse 9
8400 Winterthur (CH)**

(54) **Verfahren und Vorrichtungen zum Erfassen eines kundenspezifischen Bezugs von Dienstleistungen**

(57)   Zum Erfassen des Bezugs von Dienstleistungen eines Dienstleistungssystems, wird in einem Rechner (BR) des Dienstleistungssystems eine Aufforderungsmeldung (c(BR)) mittels Elliptischer Kurven Kryptographie basierend auf Dienstleistungsdaten (Dat(BR)) erzeugt (S1) und funkbasiert ausgesendet (S2). In Kundenmedien (KM) wird aus der Aufforderungsmeldung (c(BR)) mittels der Elliptischen Kurven Kryptographie und einem im Kundenmedium (KM) gespeicherten privaten Schlüssel (Priv(KM)) ein Authentisierungsbeleg (r(KM)) erzeugt (S4). In den Kundenmedien (KM) wird überdies mittels der Elliptischen Kurven Kryptographie aus einer Zufallszahl (RN) und einem öffentlichen Schlüssel (Pub(KV)) eines Kundenvertragspartners (KV) ein symmetrischer Schlüssel (Key(KM)) erzeugt (S7). In den Kundenmedien (KM) wird eine Antwortmeldung (Dat(KM)) erzeugt (S9), welche einen aus dem Authentisierungsbeleg (r(KM)) und einer Kundenidentifizierung erzeugten und mit dem symmetrischen Schlüssel (Key(KM) verschlüsselten Antwortmeldungsteil (rCiph(KM)) und einen mittels der Elliptischen Kurven Kryptographie aus der Zufallszahl erzeugten (S6) Kurvenpunkt (c(KM)) umfasst. Die Antwortmeldungen der Kundenmedien (KM) werden vom Rechner (BR) an ein Rechenzentrum (RKV) des Kundenvertragspartners (KV) übermittelt (S12).

**Fig. 1**

EP 2 843 872 A1

## Beschreibung

Die vorliegende Erfindung bezieht sich auf ein Verfahren, ein elektronisches Kundenmedium, ein Computersystem, ein Computerprogrammprodukt und einen Rechner zum Erfassen eines kundenspezifischen Bezugs von Dienstleistungen eines Dienstleistungssystems gemäss den unabhängigen Patentansprüchen.

## Technisches Gebiet

Die vorliegende Erfindung betrifft die vorgenannten Gegenstände insbesondere für die Erfassung einer kundenspezifischen Benutzung eines öffentlichen Verkehrsmittels. Die kundenspezifische Benutzung stellt in diesem Fall eine Fahrt mit einem Verkehrsmittel, wobei nicht nur alleine eine Fahrt, sondern auch die Gegebenheiten wie zB. 1. Klasse, 2. Klasse, und allfällige Fahrtunterbrechungen mit erfasst werden.

## Stand der Technik

Die Erfassung des Bezugs von Dienstleistungen eines Dienstleistungssystems durch Kunden, die sich mit einem zugeordneten Kundenmedium identifizieren, ist insbesondere mit kontaktbehafteten Kundenmedien und entsprechenden Lesegeräten beim Dienstleistungsanbieter bereits heute weit verbreitet. Weniger verbreitet ist die Erfassung des kundenspezifischen Bezugs von Dienstleistungen mittels kontaktloser Kundenmedien, wobei sich dazu jedoch vermehrt die Einführung von Erfassungssystemen mit sogenannten NFC-Schnittstellen (Near Field Communication) abzeichnet. Erfassungssysteme mit NFC-Schnittstellen können beispielsweise auch zur Erfassung der Benützung von öffentlichen Verkehrsmitteln eingesetzt werden, welche gemäss einem CICO-Verfahren (Check In - Check Out) funktionieren, wobei ein Fahrgast sich mit seinem Kundenmedium beim Betreten des Verkehrsmittels bei einem entsprechenden Lesegerät anmeldet und beim Verlassen wieder abmeldet. Bei grossen Benutzerzahlen und zahlreichen Haltestellen ist dies jedoch oft ineffizient und nicht praxistauglich und überdies auf eine Kooperation der Benutzer angewiesen. Geeigneter wären hierfür Systeme mit einer Raumerfassung gemäss einem BIBO-Verfahren (Be In - Be Out). Dabei werden die Kundenmedien (elektronische Fahrkarten) durch das jeweilige Fahrzeug während der Fahrt im ganzen Raum erfasst. Dies geschieht über Funk, ohne aktive Handlung des Inhabers. Die einzige Bedingung ist, dass er das Medium so tragen muss, dass es nicht abgeschirmt wird. Mit dem BIBO-Verfahren wird erkannt, wenn sich ein Kundenmedium in einem Fahrzeug befindet (Be In) und wann nicht (Be Out). Nötigenfalls werden dabei auch Ein- und Ausstiege detektiert. In der Schrift EP 1 210 693 B1 [1] ist ein solches BIBO-System offenbart. Durch Protokolle werden dabei auch Betrugsversuche erkannt, beispielsweise wenn das elektronisches Kundenmedium (="elektronisches Billett" in der Nomenklatur von [1]) abgeschirmt wird zwecks der Vermeidung einer Erfassung.
Die technischen Anforderungen eines erfolgreichen und praxistauglichen BIBO-Erfassungssystem für die Erfassung des kundenspezifischen Bezugs von Dienstleistungen eines Dienstleistungssystems sind jedoch sehr hoch, ist doch eine hohe Erfassungsgeschwindigkeit bei gleichzeitig hoher Zuverlässigkeit und Sicherheit sowie möglichst tiefer energetischer Belastung der Kundenmedien erforderlich.

## Darstellung der Erfindung

Es ist eine Aufgabe der vorliegenden Erfindung ein Verfahren und Vorrichtungen zum Erfassen eines kundenspezifischen Bezugs von Dienstleistungen vorzuschlagen, welche zumindest einige Nachteile der bekannten Systeme nicht aufweisen. Es ist insbesondere eine Aufgabe der vorliegenden Erfindung derartige Verfahren und Vorrichtungen zum Erfassen der kundenspezifischen Benutzung von öffentlichen Verkehrsmitteln vorzuschlagen. Es ist insbesondere eine Aufgabe der vorliegenden Erfindung derartige Verfahren und Vorrichtungen vorzuschlagen, welche eine hohe Erfassungsgeschwindigkeit bei hoher Zuverlässigkeit und beweisbarer Sicherheit ermöglichen. Insbesondere soll die Erfassung der konsumierten Dienstleistung durch den Kunden nicht abgestritten werden können.
Gemäss der vorliegenden Erfindung werden diese Ziele durch die Merkmale der unabhängigen Ansprüche erreicht. Weitere vorteilhafte Ausführungsformen gehen aus den abhängigen Ansprüchen und der Beschreibung hervor.
Die oben genannten Ziele werden durch die vorliegende Erfindung insbesondere dadurch erreicht, dass zum Erfassen eines kundenspezifischen Bezugs von Dienstleistungen eines Dienstleistungssystems in einem Rechner des Dienstleistungssystems eine Aufforderungsmeldung erzeugt wird mittels «Elliptischer Kurven Kryptographie» ECC basierend auf Dienstleistungsdaten, und dass die Aufforderungsmeldung funkbasiert im Dienstleistungssystem ausgesendet wird. Die Aufforderungsmeldung wird in Kundenmedien der Kunden im Dienstleistungssystem empfangen und in den Kundenmedien wird jeweils ein Authentisierungsbeleg erzeugt mittels der Elliptischen Kurven Kryptographie aus der Aufforderungsmeldung und einem im Kundenmedium gespeicherten privaten Schlüssel. In den Kundenmedien wird jeweils ein symmetrischer Schlüssel erzeugt mittels der Elliptischen Kurven Kryptographie aus einer Zufallszahl und einem öffentlichen Schlüssel eines Kundenvertragspartners. In den Kundenmedien wird jeweils eine Antwortmeldung erzeugt, welche einen aus dem Authentisierensbeleg und einer Kundenidentifizierung erzeugten und mit dem symmetrischen Schlüssel verschlüsselten Antwortmeldungsteil und einen mittels der Elliptischen Kurven Kryptographie aus der Zufallszahl erzeugten Kurvenpunkt umfasst, und die Antwortmeldung wird an den Rechner gesendet. Die Antwortmeldungen von den Kundenmedien werden im Rechner zur gemeinsamen Übermittlung an ein Rechenzentrum des Kundenvertragspartners gesammelt.

Die funkbasierte Aussendung der Aufforderungsmeldung vom Rechner des Dienstleistungssystems, welche als Broadcast «Ping» betrachtet werden kann, und die individuellen Antwortmeldungen der Kundenmedien an den Rechner, welche als individuelles «Pong» betrachtet werden können, ermöglichen die gegenseitige Authentisierung von Kundenmedien und Kundenvertragspartner mit einem einfachen «Ping-Pong»-Verfahren, das mit einem minimalen Funkverkehr auskommt und somit eine grosse Erfassungsgeschwindigkeit und hohe Zuverlässigkeit aufweist. Überdies werden die Kunden respektive deren Kundenmedien anonymisiert und ein unberechtigtes Tracking verhindert.

In einer Ausführungsvariante ist das Verfahren zum Erfassen einer kundenspezifischen Benutzung eines öffentlichen Verkehrsmittels vorgesehen. Dabei ist das Dienstleistungssystem als öffentliches Verkehrsmittel ausgeführt ist und der Rechner des Dienstleistungssystems ist als Bordrechner im Verkehrsmittel ausgeführt. Die Aufforderungsmeldung wird vom Bordrechner mittels Elliptischer Kurven Kryptographie basierend auf Fahrtabschnittdaten erzeugt und im Verkehrsmittel ausgesendet. Die Aufforderungsmeldung wird in Kundenmedien der Kunden im Verkehrsmittel empfangen und die Antwortmeldung wird von den Kundenmedien im Verkehrsmittel an den Bordrechner gesendet, der die Antwortmeldungen zur gemeinsamen Übermittlung an das Rechenzentrum des Kundenvertragspartners sammelt. Die Fahrtabschnittdaten umfassen beispielsweise eine Bordrechneridentifizierung, eine Fahrtabschnittidentifizierung und aktuelle Zeitangaben. In einer Variante wird aus den Fahrtabschnittdaten ein Hashwert erzeugt und die Aufforderungsmeldung wird aus dem Hashwert der Fahrtabschnittdaten erzeugt.

In einer Ausführungsvariante wird der öffentliche Schlüssel des Kundenvertragspartners mittels der Elliptischen Kurven Kryptographie aus einem privaten Schlüssel des Kundenvertragspartners erzeugt und im verschlüsselten Antwortmeldungsteil wird als Kundenidentifizierung ein öffentlicher Schlüssel des Kundenmediums verwendet, welcher mittels der Elliptischen Kurven Kryptographie aus dem im Kundenmedium gespeicherten privaten Schlüssel erzeugt wird.

In einer weiteren Ausführungsvariante werden die gesammelten Antwortmeldungen im Rechenzentrum des Kundenvertragspartners empfangen und die symmetrischen Schlüssel der Kundenmedien werden im Rechenzentrum jeweils mittels der Elliptischen Kurven Kryptographie aus einem im Rechenzentrum gespeicherten privaten Schlüssel des Kundenvertragspartners und dem in der betreffenden Antwortmeldung enthaltenen Kurvenpunkt des Kundenmediums erzeugt.

In einer Ausführungsvariante werden die in den Antwortmeldungen enthaltenen verschlüsselten Antwortmeldungsteile der Kundenmedien im Rechenzentrum jeweils mittels des symmetrischen Schlüssels des Kundenmediums entschlüsselt.

In einer weiteren Ausführungsvariante werden die Dienstleistungsdaten vom Rechner zusammen mit den gesammelten Antwortmeldungen an das Rechenzentrum des Kundenvertragspartners übermittelt. Die Kundenmedien werden im Rechenzentrum jeweils durch Vergleichen des im verschlüsselten Antwortmeldungsteil des Kundenmediums enthaltenen Authentisierungsbelegs mit einem Vergleichswert authentisiert, der mittels Elliptischer Kurven Kryptographie basierend auf den vom Rechner empfangenen Dienstleistungsdaten und einem im verschlüsselten Antwortmeldungsteil des Kundenmediums enthaltenen öffentlichen Schlüssel des Kundenmediums erzeugt wird.

In einer Ausführungsvariante werden die Kundenmedien im Rechenzentrum jeweils durch Vergleichen eines im verschlüsselten Antwortmeldungsteil des Kundenmediums enthaltenen öffentlichen Schlüssels des Kundenmediums mit in einer Kundendatenbank gespeicherten öffentlichen Schlüsseln der Kundenmedien identifiziert. Die vom Rechner empfangenen Fahrtabschnittdaten werden einer durch den öffentlichen Schlüssel des Kundenmediums bestimmten Kundenidentifizierung zugeordnet.

In weiteren Ausführungsvarianten wird der mit dem symmetrischen Schlüssel verschlüsselte Antwortmeldungsteil zudem aus Statusdaten des Kundenmediums und einer Sequenznummer erzeugt. Die Dienstleistungsdaten umfassen beispielsweise eine Rechneridentifizierung, eine Dienstleistungsidentifizierung und aktuelle Zeitangaben. Aus den Dienstleistungsdaten wird ein Hashwert erzeugt und die Aufforderungsmeldung wird aus dem Hashwert der Dienstleistungsdaten erzeugt.

Neben einem Verfahren zum Erfassen eines kundenspezifischen Bezugs von Dienstleistungen eines Dienstleistungssystems, bezieht sich die vorliegende Erfindung überdies auf die nachfolgend aufgeführten interagierenden Komponenten:

a) ein tragbares elektronisches Kundenmedium zum Erfassen des kundenspezifischen Bezugs von Dienstleistungen des Dienstleistungssystems, beispielsweise zum Erfassen der kundenspezifischen Benutzung eines öffentlichen Verkehrsmittels, sowie ein Computerprogrammprodukt mit Computerprogrammcode zum Steuern eines Prozessors des Kundenmediums;

b) ein Computersystem zum Erfassen eines kundenspezifischen Bezugs von Dienstleistungen eines Dienstleistungssystems, beispielsweise zum Erfassen der kundenspezifischen Benutzung eines öffentlichen Verkehrsmittels, sowie ein Computerprogrammprodukt mit Computerprogrammcode zum Steuern eines Prozessors des Computersystems; und

c) einen Rechner für ein Dienstleistungssystem zum Erfassen eines kundenspezifischen Bezugs von Dienstleistungen, beispielsweise ein Bordrechner in einem öffentlichen Verkehrsmittel zum Erfassen der kundenspezifischen Benutzung des öffentlichen Verkehrsmittels, sowie ein Computerprogrammprodukt mit Computerprogrammcode zum Steuern eines Prozessors des Rechners.

Dabei bilden das Computersystem, der Rechner und mindestens ein Kundenmedium zusammen ein computerimplementiertes Dienstleistungserfassungssystem zum Erfassen eines kundenspezifischen Bezugs von Dienstleistungen, beispielsweise ein computerimplementiertes Erfassungssystem zum Erfassen der kundenspezifischen Benutzung von öffentlichen Verkehrsmitteln.

Das tragbare elektronische Kundenmedium zum Erfassen des kundenspezifischen Bezugs von Dienstleistungen des Dienstleistungssystems ist mit einem Kommunikationsmodul zum funkbasierten Datenaustausch mit einem Rechner des Dienstleistungssystems versehen, beispielsweise mit einem Bordrechner des öffentlichen Verkehrsmittels, und umfasst mindestens einen Prozessor, der programmiert ist die folgenden Schritte auszuführen: Empfangen einer Aufforderungsmeldung vom Rechner, Erzeugen eines Authentisierungsbelegs mittels Elliptischer Kurven Kryptographie aus der Aufforderungsmeldung und einem im Kundenmedium gespeicherten privaten Schlüssel, Erzeugen eines symmetrischen Schlüssels mittels der Elliptischen Kurven Kryptographie aus einer Zufallszahl und einem öffentlichen Schlüssel eines Kundenvertragspartners, Erzeugen einer Antwortmeldung, welche einen aus dem Authentisierensbeleg und einer Kundenidentifizierung erzeugten und mit dem symmetrischen Schlüssel verschlüsselten Antwortmeldungsteil und einen mittels der Elliptischen Kurven Kryptographie aus der Zufallszahl erzeugten Kurvenpunkt umfasst, und Senden der Antwortmeldung an den Rechner.

In einer Ausführungsvariante ist der Prozessor des Kundenmediums überdies programmiert, im verschlüsselten Antwortmeldungsteil einen öffentlichen Schlüssel des Kundenmediums als Kundenidentifizierung zu verwenden, der mittels der Elliptischen Kurven Kryptographie aus dem im Kundenmedium gespeicherten privaten Schlüssel erzeugt wird, und den mit dem symmetrischen Schlüssel verschlüsselten Antwortmeldungsteil zudem aus Statusdaten des Kundenmediums und einer Sequenznummer zu erzeugen.

Das Computerprogrammprodukt zum Steuern des Kundenmediums umfasst ein nicht-transientes computerlesbares Medium mit darauf gespeichertem Computerprogrammcode, der eingerichtet ist, einen Prozessor des mit einem Kommunikationsmodul zum funkbasierten Datenaustausch mit einem Rechner eines Dienstleistungssystems versehenen, tragbaren elektronischen Kundenmediums derart zu steuern, dass der Prozessor die folgenden Schritte ausführt: Empfangen einer Aufforderungsmeldung vom Rechner, Erzeugen eines Authentisierungsbelegs mittels Elliptischer Kurven Kryptographie aus der Aufforderungsmeldung und einem im Kundenmedium gespeicherten privaten Schlüssel, Erzeugen eines symmetrischen Schlüssels mittels der Elliptischen Kurven Kryptographie aus einer Zufallszahl und einem öffentlichen Schlüssel eines Kundenvertragspartners, Erzeugen einer Antwortmeldung, welche einen aus dem Authentisierensbeleg und einer Kundenidentifizierung erzeugten und mit dem symmetrischen Schlüssel verschlüsselten Antwortmeldungsteil und einen mittels der Elliptischen Kurven Kryptographie aus der Zufallszahl erzeugten Kurvenpunkt umfasst, und Senden der Antwortmeldung an den Rechner.

Das Computersystem zum Erfassen des kundenspezifischen Bezugs von Dienstleistungen eines Dienstleistungssystems, ist mit einem Kommunikationssystem zum Datenaustausch mit mindestens einem Rechner des Dienstleistungssystems verbindbar, und umfasst einen gespeicherten privaten Schlüssel eines Kundenvertragspartners und mindestens einen Prozessor, der programmiert ist die folgenden Schritte auszuführen: Erzeugen eines öffentlichen Schlüssels des Kundenvertragspartners mittels Elliptischer Kurven Kryptographie aus dem privaten Schlüssel des Kundenvertragspartners, Empfangen vom Rechner von gesammelten Antwortmeldungen von Kundenmedien von Kunden des Dienstleistungssystems, Erzeugen von symmetrischen Schlüsseln der Kundenmedien jeweils mittels der Elliptischen Kurven Kryptographie aus dem gespeicherten privaten Schlüssel des Kundenvertragspartners und einem in der Antwortmeldung enthaltenen, mittels der Elliptischen Kurven Kryptographie aus einer Zufallszahl erzeugten Kurvenpunkt des Kundenmediums, Entschlüsseln von in den Antwortmeldungen enthaltenen verschlüsselten Antwortmeldungsteilen der Kundenmedien jeweils mittels des symmetrischen Schlüssels des Kundenmediums, und Authentisieren der Kundenmedien jeweils durch Vergleichen eines im Antwortmeldungsteil des Kundenmediums enthaltenen Authentisierungsbelegs mit einem Vergleichswert, welcher mittels Elliptischer Kurven Kryptographie basierend auf vom Rechner empfangenen Dienstleistungsdaten und einem im Antwortmeldungsteil des Kundenmediums enthaltenen öffentlichen Schlüssel des Kundenmediums erzeugt wird.

In einer Ausführungsvariante ist der der Prozessor des Computersystems überdies programmiert, die Kundenmedien jeweils durch Vergleichen eines im verschlüsselten Antwortmeldungsteil des Kundenmediums enthaltenen öffentlichen Schlüssels des Kundenmediums mit in einer Kundendatenbank gespeicherten öffentlichen Schlüsseln der Kundenmedien zu vergleichen, und vom Rechner empfangene Dienstleistungsdaten einer durch den öffentlichen Schlüssel des Kundenmediums bestimmten Kundenidentifizierung zuzuordnen.

Das Computerprogrammprodukt zum Steuern des Computersystems umfasst ein nicht-transientes computerlesbares Medium mit darauf gespeichertem Computerprogrammcode, der eingerichtet ist, einen Prozessor des mit einem Kommunikationssystem zum Datenaustausch mit einem Rechner eines Dienstleistungssystems verbindbaren Computersystems derart zu steuern, dass der Prozessor die folgenden Schritte ausführt:

- Erzeugen eines öffentlichen Schlüssels des Kundenvertragspartners mittels Elliptischer Kurven Kryptographie aus einem im Computersystem gespeicherten privaten Schlüssel eines Kundenvertragspartners,
- Empfangen vom Rechner von gesammelten Antwortmeldungen von Kundenmedien von Kunden des Dienstleistungssystems,
- Erzeugen von symmetrischen der Kundenmedien jeweils mittels der Elliptischen Kurven Kryptographie aus dem gespeicherten privaten Schlüssel des Kundenvertragspartners und einem in der Antwortmeldung enthaltenen, mittels der Elliptischen Kurven Kryptographie aus einer Zufallszahl erzeugten Kurvenpunkt des Kundenmediums,
- Entschlüsseln von in den Antwortmeldungen enthaltenen verschlüsselten Antwortmeldungsteilen der Kundenmedien jeweils mittels des symmetrischen Schlüssels des Kundenmediums, und
- Authentisieren der Kundenmedien jeweils durch Vergleichen eines im Antwortmeldungsteil des Kundenmediums enthaltenen Authentisierungsbelegs mit einem Vergleichswert, welcher mittels Elliptischer Kurven Kryptographie basierend auf vom Rechner empfangenen Dienstleistungsdaten und einem im Antwortmeldungsteil des Kundenmediums enthaltenen öffentlichen Schlüssel des Kundenmediums erzeugt wird.

Der Rechner für das Dienstleistungssystem zum Erfassen des kundenspezifischen Bezugs von Dienstleistungen ist mit einem Kommunikationssystem zum funkbasierten Datenaustausch mit Kundenmedien von Kunden im Dienstleistungssystem versehen und umfasst mindestens einen Prozessor, der programmiert ist die folgenden Schritte auszuführen: Erzeugen einer Aufforderungsmeldung mittels Elliptischer Kurven Kryptographie basierend auf Dienstleistungsdaten und funkbasiertes Aussenden der Aufforderungsmeldung im Dienstleistungssystem, und Sammeln von Antwortmeldungen von den Kundenmedien der Kunden im Dienstleistungssystem zur gemeinsamen Übermittlung an ein Rechenzentrum eines Kundenvertragspartners.

In einer Ausführungsvariante ist der Rechner als Bordrechner in einem Verkehrsmittel angeordnet und zum Erfassen einer kundenspezifischen Benutzung des öffentlichen Verkehrsmittels ausgeführt. Der Prozessor des Bordrechners ist überdies programmiert, in den Dienstleistungsdaten Fahrtabschnittdaten mit einer Bordrechneridentifizierung, einer Fahrtabschnittidentifizierung und einer aktuellen Zeitangabe einzufügen, aus den Fahrtabschnittdaten einen Hashwert zu erzeugen, und die Aufforderungsmeldung aus dem Hashwert der Fahrtabschnittdaten zu erzeugen.

Das Computerprogrammprodukt zum Steuern des Rechners umfasst ein nicht-transientes computerlesbares Medium mit darauf gespeichertem Computerprogrammcode, der eingerichtet ist, einen Prozessor des mit einem Kommunikationssystem zum funkbasierten Aussenden von Daten an Kundenmedien von Kunden in einem Dienstleistungssystem versehenen Rechners derart zu steuern, dass der Prozessor die folgenden Schritte ausführt: Erzeugen einer Aufforderungsmeldung mittels Elliptischer Kurven Kryptographie basierend auf Dienstleistungsdaten und funkbasiertes Aussenden der Aufforderungsmeldung im Dienstleistungssystem, und Sammeln von Antwortmeldungen von den Kundenmedien der Kunden im Dienstleistungssystem zur gemeinsamen Übermittlung an ein Rechenzentrum eines Kundenvertragspartners.

Beschreibung der Zeichnung

Nachfolgend wird eine Ausführung der vorliegenden Erfindung anhand eines Beispieles beschrieben. Das Beispiel der Ausführung wird durch die folgende beigelegte Figur illustriert:

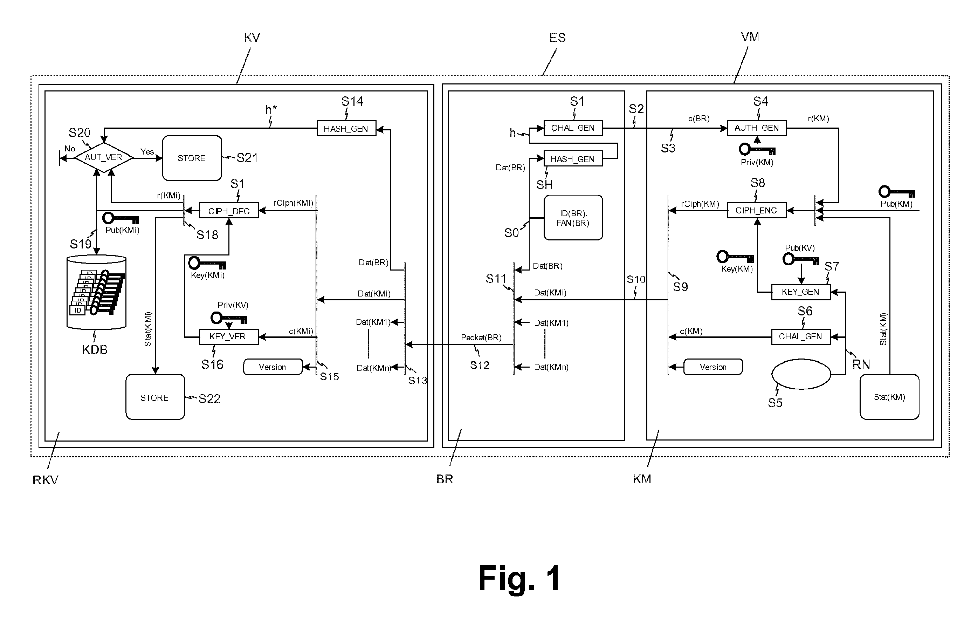

Figur 1 zeigt ein kombiniertes Block- und Flussdiagramm, welches schematisch ein Erfassungssystem zur Erfassung des kundenspezifischen Bezugs von Dienstleistungen eines Dienstleistungssystems illustriert, wobei das Erfassungssystem ein Dienstleistungssystem in Form eines öffentlichen Verkehrsmittel VM aufweist, in dem ein Bordrechner und ein Kundenmedium eines Kunden angeordnet sind.

**Wege zur Ausführung der Erfindung**

In der Figur 1 bezieht sich das Bezugszeichen ES auf ein computerimplementiertes Erfassungssystem zur Erfassung des kundenspezifischen Bezugs von Dienstleistungen eines Dienstleistungssystems. Nachfolgend wird das Erfassungssystem ES am Beispiel der Erfassung der kundenspezifischen Benutzung eines öffentlichen Verkehrsmittels VM beschrieben, beispielsweise Eisenbahn, Tram, Metro, Bergbahn, Bus, Schiff, etc. Der Fachmann wird jedoch verstehen, dass das Erfassungssystem ES und ein entsprechendes Erfassungsverfahren auch für die Erfassung des Bezugs anderer Dienstleistungen geeignet ist, die von anderen Dienstleistungssystemen erbracht werden, beispielsweise der Besuch von Museen, Sportveranstaltungen, Theateraufführungen, Konzerten oder anderen Kunst- und Unterhaltungsanlässen, die Benutzung von Computersystemen und/oder Telekommunikationsdiensten, der Bezug von Medien wie Musik oder Video oder anderen Informationen in digitaler Form, etc. Im Erfassungssystem ES sind drei Parteien beteiligt:

i) der Dienstleistungserbringer, der mittels eines Dienstleistungssystems Dienstleistungen erbringt,

ii) ein Kunde, der die Dienstleistungen bezieht, und

iii) ein Kundenvertragspartner KV, mit dem der Kunde einen Vertrag zur Nutzung des Erfassungssystems ES und der dadurch erfassten Dienstleistungssysteme abschliesst.

Die Kunden erhalten vom Kundenvertragspartner KV ein Kundenmedium KM, das später ausführlicher beschrieben wird. Auch die Dienstleistungserbringer schliessen mit dem Kundenvertragspartner KV einen Vertrag zur Nutzung des Erfassungssystems ES ab und erhalten von diesem Rechner und andere Komponenten des Erfassungssystems ES zur Installation in ihre Dienstleistungssysteme, beispielsweise Bordrechner BR und andere Installationen zum Einbau in ihre öffentlichen Verkehrsmittel VM. Der Kundenvertragspartner KV betreibt ein Rechenzentrum RKV mit einem oder mehreren Computersystemen, in welchem die erfassten Leistungsbezüge gesammelt werden. Auf der Basis der erfassten Leistungsbezüge stellt der Kundenvertragspartner KV den Kunden Rechnung für die bezogenen Dienstleistungen, z.B. Fahrten respektive befahrene Fahrtabschnitte, und verteilt die Einnahmen an die einzelnen Dienstleistungserbringer entsprechend den von ihnen erbrachten Dienstleistungen.

Wie in der Figur 1 schematisch dargestellt ist, umfasst das Erfassungssystem ES ein Rechenzentrum RKV und zum Erfassen der kundenspezifischen Benutzung von öffentlichen Verkehrsmitteln VM mehrere in den Verkehrsmitteln VM angeordnete Bordrechner BR und mehrere Kundenmedien KM der Kunden der Verkehrsmittel VM.

Das Kundenmedium KM ist als tragbares, mobiles Kundenidentifizierungsmedium ausgestaltet, beispielsweise in Form einer Chipkarte, eines «Dongles» oder eines in einer anderen Form ausgestalteten kundenspezifischen Hardware-Tokens. Das Kundenmedium KM umfasst einen Prozessor und ein Kommunikationsmodul zum funkbasierten Datenaustausch mit dem Bordrechner BR. Zur drahtlosen Datenkommunikation mit dem Bordrechner BR für die Dienstleistungserfassung umfasst das Kommunikationsmodul einen Transceiver, beispielsweise im 868MHz Bereich. Je nach Ausführungsvariante ist überdies ein Funkempfänger zum Empfang von Aktivierungssignalen im Verkehrsmittel VM, beispielsweise im 6.78MHz Bereich, und/oder eine NFC-Schnittstelle, beispielsweise im 13.56 MHz Bereich, für den Datenaustausch mit einem Kundenterminal vorgesehen. Die Speisung des Kundenmediums KM erfolgt über eine (aufladbare) interne Batterie.

Der Bordrechner BR umfasst einen oder mehrere Prozessoren und ist mit einem Kommunikationssystem zum funkbasierten Datenaustausch mit den Kundenmedien KM ausgestattet, beispielsweise mehrere Transceivers, die über ein Kommunikationsnetz, z.B. ein Ethernet, mit dem Bordrechner BR respektive dessen Prozessoren verbunden sind. Der Bordrechner BR ist überdies für den funkbasierten Datenaustausch mit dem Rechenzentrum RKV eingerichtet, beispielsweise über GSM oder UMTS oder andere Mobilfunknetze.

Das Rechenzentrum RKV umfasst ein oder mehrere Computersysteme mit jeweils einem oder mehreren Prozessoren und ist für den Datenaustausch mit den Bordrechnern BR mit einem Kommunikationssystem verbindbar, beispielsweise ein Kommunikationssystem mit einem GSM oder UMTS oder einem anderen Mobilfunknetz.

Die Computersysteme respektive Prozessoren des Rechenzentrums RKV, der Bordrechner BR respektive dessen Prozessoren und der Prozessor des Kundenmediums KM werden jeweils von Computerprogrammcode gesteuert, der auf computerlesbaren, nicht-transienten Speichermedien gespeichert ist. Diese Computerprogrammprodukte sind fest oder entfernbar mit den betreffenden Prozessoren verbunden. Der Computerprogrammcode ist ausgeführt, die betreffenden Prozessoren so zu steuern, dass sie das nachfolgend beschriebene Erfassungsverfahren ausführen.

In den nachfolgenden Abschnitten wird mit Bezug zu Figur 1 eine Sequenz von im Erfassungssystem ES ausgeführten Schritten zum Erfassen des kundenspezifischen Bezugs von Dienstleistungen am Beispiel der Erfassung der kundenspezifischen Benutzung von öffentlichen Verkehrsmitteln VM beschrieben.

Im Schritt S0 werden vom Bordrechner BR für die Erfassung einer Dienstleistung Dienstleistungsdaten Dat(BR) erzeugt, welche im vorliegenden Beispiel Fahrtabschnittdaten umfassen. Die Dienstleistungsdaten respektive Fahrtabschnittdaten Dat(BR) umfassen eine Rechneridentifizierung, insbesondere eine Identifizierung ID(BR) des Bordrechners BR des Verkehrsmittels VM, eine Dienstleistungsidentifizierung, insbesondere eine Fahrtabschnittsnummer FAN(BR) des aktuell vom Verkehrsmittel VM befahrenen Fahrtabschnitts, aktuelle Zeitangaben, beispielsweise das aktuelle Datum und die aktuelle Zeit, sowie weitere Angaben.

Im Schritt SH erzeugt der Bordrechner BR mittels der Funktion HASH_GEN aus den Dienstleistungsdaten Dat(BR) einen Hashwert h.

Im Schritt S1 erzeugt der Bordrechner BR mittels der Funktion CHAL_GEN aus dem Hashwert h eine Aufforderungsmeldung c(BR). Die Funktion CHAL_GEN erzeugt die Aufforderungsmeldung c(BR) mittels Elliptischer Kurven Kryptographie basierend auf den Dienstleistungsdaten Dat(BR).

Auf elliptischen Kurven basierende Kryptographie ermöglicht stromsparende Protokolle mit kurzen Datentelegrammen zwischen den Parteien. Im als Diffie-Hellman Protokoll bekannten Grundprotokoll wird im Prinzip eine Schlüsselvereinbarung zwischen zwei Parteien realisiert. Dabei generieren beide Parteien einen an die Gegenpartei kommunizierbaren Challenge $c_x=Mul(x,g)$ respektive $c_y=Mul(y,g)$, der auf einem eigenen Geheimnis x respektive y beruht. $Mul(\cdot,g)$ bezeichnet dabei die kommutative Gruppenoperation in der hier additiv geschriebenen EC-Gruppe (Elliptic Curve). Daraus kann dann jede Partei ein gemeinsames Geheimnis $r=Mul(y,c_x)=y\cdot x\cdot g$ respektive $r=Mul(x,c_y)=x\cdot y\cdot g$ berechnen, das durch Mithören der Kommunikation nicht herausgefunden werden kann, ohne das zugrunde liegende kryptographische Problem zu lösen, d.h. die schwierige Invertierung der Gruppenoperation $r=Mul(\lambda,P)$.

Basierend auf diesem Grundprotokoll werden zwei Protokolle abgeleitet, die kombiniert die gewünschten kryptographischen Eigenschaften realisieren, d.h. eine nichtabstreitbare Authentisierung von bezogenen Leistungsdaten durch das Kundenmedium KM und eine anonymisierte, nicht trackbare Übermittlung der Daten an den Kundevertragspartner KV. Dazu wird im ersten Protokoll $c_x$ durch den öffentlichen Schlüssel Pub(KM) des Kundenmediums KM und im zweiten Protokoll $c_y$ durch den öffentlichen Schlüssel Pub(KV) des Kundenvertragspartners KV ersetzt.

Die Verschränkung dieser beiden abgeleiteten Protokolle erfolgt wie nachfolgend im Detail beschrieben wird.

Im Schritt S1 bildet die Funktion CHAL_GEN in der Aufforderungsmeldung $c(BR)=Mul(h,g)$ den Hashwert h mit dem Generatorpunkt g der gewählten elliptischen Kurve (EC-Gruppe) auf einen Punkt der elliptischen Kurve ab.

Im Schritt S2 wird die Aufforderungsmeldung c(BR) vom Bordrechner BR funkbasiert im Dienstleistungssystem, also im Verkehrsmittel VM, ausgesendet. Durch das broadcastmässige Aussenden der Aufforderungsmeldung c(BR) wird der sich von Fahrtabschnitt zu Fahrtabschnitt ändernde Kurvenpunkt als Challenge gleichzeitig an alle zu erfassenden Kundenmedien KM im Verkehrsmittel KM kommuniziert.

Im Schritt S3 wird die Aufforderungsmeldung c(BR) in den Kundenmedien KM im Verkehrsmittel VM empfangen.

Im Schritt S4 erzeugt das betreffende Kundenmedium KM mittels der Funktion AUTH_GEN aus der Aufforderungsmeldung c(BR) einen Authentisierungsbeleg r(KM). Die Funktion AUTH_GEN erzeugt den Authentisierungsbeleg r(KM) mittels Elliptischer Kurven Kryptographie aus der Aufforderungsmeldung c(BR) und einem im Kundenmedium KM gespeicherten privaten Schlüssel Priv(KM). Dabei bildet die Funktion AUTH_GEN den Authentisierungsbeleg

$$r(KM)=Mul(Priv(KM),c(BR))$$

mit dem privaten Schlüssel Priv(KM) als eigenes Geheimnis und der Aufforderungsmeldung c(BR) als Challenge. Der Authentisierungsbeleg ist somit definiert durch:

$$r(KM)=Mul(Priv(KM),c(BR))=Priv(KM)\cdot h\cdot g.$$

Jedes Kundenmedium KM unterschreibt somit die erhaltene Aufforderungsmeldung c(BR) mittels der Funktion AUTH_GEN unter Verwendung seines privaten Schlüssels Priv(KM). Mit dem so gebildeten Authentisierungsbeleg r(KM) kann später belegt werden, dass das Kundenmedium KM zum Zeitpunkt der Entstehung der Dienstleistungsdaten respektive Fahrtabschnittdaten Dat(BR) vom betreffenden Bordrechner BR erfasst worden ist. Der Authentisierungsbeleg r(KM) wird deshalb zusammen mit einem Identitätsmerkmal des Kundemediums KM auf sichere Art dem Kundenvertragspartner KV übermittelt, wie nachfolgend beschrieben wird, wobei in einer Ausführungsvariante der öffentliche Schlüssel Pub(KM) des Kundenmediums KM als Kundenidentifizierung verwendet wird. Dabei wird der öffentliche Schlüssel Pub(KM) des Kundenmediums KM mittels der Elliptischen Kurven Kryptographie aus dem privaten Schlüssel Priv(KM) des Kundenmediums KM erzeugt. Das heisst der öffentliche Schlüssel

$$Pub(KM)=Mul(Priv(KM),g)$$

ist eine mit dem Generatorpunkt g der gewählten elliptischen Kurve (EC-Gruppe) erzeugte Abbildung des privaten Schlüssels Priv(KM) auf einen Punkt der elliptischen Kurve. Der öffentliche Schlüssel des Kundenmediums KM ist somit definiert durch:

$$Pub(KM)=Mul(Priv(KM),g)=Priv(KM)\cdot g.$$

Der im Diffie-Hellman Protokoll verwendete Challenge $c_y$ wird hier also basierend auf dem verwendeten Generatorpunkt der Kurvengruppe durch den öffentlichen Schlüssel

$$Pub(KM)=Mul(Priv(KM),g)$$

ersetzt. Der y-Wert im Diffie-Hellman Protokoll wird durch den Hashwert h der zu authentisierenden Dienstleistungsdaten definiert.

In einer vereinfachten Ausführungsvariante wird der Authentisierungsbeleg r(KM) pro Kommunikation mit einem spezifischen Bordrechner BR, im Normalfall eine ganze Fahrt, nur im ersten Fahrtabschnitt erzeugt. In den darauffolgenden Fahrtabschnitten der Reise wird der Aufforderungsmeldung c(BR) unauthentisiert anstelle von r(KM) weitergereicht. Die Authentisierung erfolgt dann implizit durch die Verwendung des gleichen symmetrischen Schlüssels Key(KM) gemäss der nachfolgend im Zusammenhang mit Schritt S7 beschriebenen Vereinfachung einer bloss einmalig erzeugten Zufallszahl RN.

Die Übertragung des Authentisierungsbelegs r(KM) und des öffentlichen Schlüssels Pub(KM) erfolgt verschlüsselt, damit das Kundenmedium KM nicht von unbefugten Dritten verfolgt werden kann. Dazu benutzen das Kundenmedium KM und der Kundenvertragspartner KV ein symmetrisches Schlüsselpaar Key(KM), das in einer Ausführungsvariante bei jeder Erfassung neu ausgehandelt wird.

Im Schritt S5 erzeugt das betreffende Kundenmedium KM eine Zufallszahl RN. Mit der Zufallszahl RN wird ein "Verrauschen" der Kommunikation bewirkt. Das Kundenmedium KM sendet keine systematischen Daten, aus denen ein Reiseprofil für ein KM erstellt werden kann. Das KM ist somit nicht mehr trackbar. In einer Ausführungsvariante wird die Zufallszahl RN pro Bordrechner BR und Reise nur einmal bestimmt, was für die Anonymisierung der betreffenden Reise durchaus genügen kann.

Im Schritt S7 erzeugt das betreffende Kundenmedium KM mittels der Funktion KEY_GEN den symmetrischen Schlüssel Key(KM) aus der Zufallszahl RN. Die Funktion KEY_GEN erzeugt den symmetrischen Schlüssel Key(KM)=Mul(RN,Pub(KV)) mittels der Elliptischen Kurven Kryptographie aus der Zufallszahl RN und einem öffentlichen Schlüssel Pub(KV) des Kundenvertragspartners KV. Dabei ist der öffentliche Schlüssel Pub(KV) des Kundenvertragspartners KV mittels der Elliptischen Kurven Kryptographie aus dem privaten Schlüssel Priv(KV) des Kundenvertragspartners KV erzeugt. Das heisst der öffentliche Schlüssel

$$Pub(KV)=Mul(Priv(KV),g)$$

ist eine mit dem Generatorpunkt g der gewählten elliptischen Kurve (EC-Gruppe) erzeugte Abbildung des privaten Schlüssels Priv(KV) auf einen Punkt der elliptischen Kurve. Der öffentliche Schlüssel des Kundenvertragspartners KV ist somit definiert durch:

$$Pub(KV)=Mul(Priv(KV),g)=Priv(KV)\cdot g$$

und der symmetrische Schlüssel ist definiert durch:

$$Key(KM)=Mul(RN,Pub(KV))=RN\cdot Priv(KV)\cdot g.$$

Der im Diffie-Hellman Protokoll verwendete Challenge $c_x$ wird hier also basierend auf dem verwendeten Generatorpunkt der Kurvengruppe durch den öffentlichen Schlüssel

$$Pub(KV)=Mul(Priv(KV),g)$$

des Kundenvertragspartners KV ersetzt. Der x-Wert im Diffie-Hellman Protokoll wird durch die im Kundenmedium KM erzeugte Zufallszahl RN definiert.

Im Schritt S6 erzeugt das betreffende Kundenmedium KM mittels der Funktion CHAL_GEN überdies aus der Zufallszahl RN einen Challenge c(KM). Die Funktion CHAL_GEN bildet den Challenge c(KM) mittels der Elliptischen Kurven Kryptographie als Kurvenpunkt $c(KM)=Mul(RN,g)$ aus der Zufallszahl RN und dem Generatorpunkt g der gewählten elliptischen Kurve (EC-Gruppe). Der Challenge respektive Kurvenpunkt ist somit definiert durch:

$$c(KM)=Mul(RN,g) \ =RN\cdot g.$$

Im Schritt S8 erzeugt das betreffende Kundenmedium KM mittels der Funktion CIPH_ENC einen verschlüsselten Antwortmeldungsteil rCiph(KM) durch Verschlüsselung des Authentisierungsbelegs r(KM) und der Kundenidentifizierung, wobei in einer Ausführungsvariante der öffentliche Schlüssel Pub(KM) des Kundenmediums KM als Kundenidentifizierung verwendet wird. In einer weiteren Variante umfasst der verschlüsselte Antwortmeldungsteil rCiph(KM) überdies Statusdaten Stat(KM) des betreffenden Kundenmediums KM, beispielsweise den Batterieladezustand, protokollierte interne Fehler und andere Zustandsinformationen des Kundenmediums KM. Zur Überprüfung der Vollständigkeit enthalten die Statusdaten überdies eine fortlaufende Sequenznummer. Die Funktion CIPH_ENC verwendet zur Verschlüsselung den symmetrischen Schlüssel Key(KM), oder zumindest einen Teil davon, z.B. 128 Bits, in einem symmetrischen Verschlüsselungsverfahren, wie beispielsweise Advanced Encryption Standard (AES).

Im Schritt S9 erzeugt das betreffende Kundenmedium KM eine Antwortmeldung Dat(KM1), Dat(KMi), Dat(KMn) auf die im Schritt S3 vom Bordrechner BR empfangene Aufforderungsmeldung c(BR). Die Antwortmeldung Dat(KM1), Dat(KMi), Dat(KMn) umfasst den verschlüsselten Antwortmeldungsteil rCiph(KM) und den als Challenge erzeugten Kurvenpunkt c(KM), welcher dem Kundenvertragspartner KV ermöglicht den symmetrischen Schlüssel Key(KM) zu erzeugen. In einer Ausführungsvariante werden zudem Angaben zu verwendeten Schlüsselversionen (unverschlüsselt) mitgeliefert.

Im Schritt S10 sendet das betreffende Kundenmedium KM die Antwortmeldung Dat(KM1), Dat(KMi), Dat(KMn) an den Rechner (BR).

Im Schritt S11 sammelt der Bordrechner BR die als Antwort auf die im Schritt S2 ausgesendete Aufforderungsmeldung c(BR) eingehenden Antwortmeldungen Dat(KM1), Dat(KMi), Dat(KMn) der Kundenmedien KM und erzeugt daraus ein Datenpaket Packet(BR). Das Datenpaket Packet(BR) umfasst neben den Antwortmeldungen Dat(KM1), Dat(KMi), Dat(KMn) auch die dazugehörenden, im Schritt S0 erzeugten Dienstleistungsdaten respektive Fahrtabschnittdaten Dat(BR). Das Datenpaket Packet(BR) wird vom Bordrechner BR kryptographisch signiert und zur Übermittlung an den Kundenvertragspartner KV abgespeichert.

Im Schritt S12 übermittelt der Bordrechner BR das signierte Datenpaket Packet(BR) an das Rechenzentrum RKV des Kundenvertragspartners KV, wo die Signatur des Bordrechners BR verifiziert und das Datenpaket Packet(BR) gegebenenfalls zur Weiterverarbeitung freigegeben wird.

Im Schritt S13 entnimmt das Rechenzentrum RKV des Kundenvertragspartners KV dem Datenpaket Packet(BR) die Dienstleistungsdaten respektive Fahrtabschnittdaten Dat(BR) des Bordrechners BR und die Antwortmeldungen Dat(KM1), Dat(KMi), Dat(KMn) der Kundenmedien KM.

Im Schritt S14 erzeugt das Rechenzentrum RKV mittels der Funktion HASH_GEN (die derjenigen im Schritt S1 vom Bordrechner BR verwendeten Funktion HASH_GEN entspricht) aus den Dienstleistungsdaten respektive Fahrtabschnittdaten Dat(BR) den Hashwert h'.

In den nachfolgend beschriebenen Schritten S15 bis S19 bearbeitet das Rechenzentrum RKV die empfangenen Antwortmeldungen Dat(KM1), Dat(KMi), Dat(KMn) der Kundenmedien KM.

Im Schritt S15 entnimmt das Rechenzentrum RKV der Antwortmeldung Dat(KM1), Dat(KMi), Dat(KMn) des betreffenden Kundenmediums KM den verschlüsselten Antwortmeldungsteil rCiph(KMi), den als Challenge erzeugten Kurvenpunkt c(KMi) und gegebenenfalls die Angaben zu den verwendeten Schlüsselversionen.

Im Schritt S16 erzeugt das Rechenzentrum RKV mittels der Funktion KEY_VER den symmetrischen Schlüssel Key(KMi) des betreffenden Kundenmediums KM aus dem als Challenge erzeugten Kurvenpunkt c(KMi) des betreffenden Kundenmediums KM. Die Funktion KEY_VER erzeugt den symmetrischen Schlüssel Key(KMi) mittels Elliptischer Kurven Kryptographie aus dem im Rechenzentrum RKV gespeicherten privaten Schlüssel Priv(KV) des Kundenvertragspartners KV und dem aus der Antwortmeldung Dat(KM1), Dat(KMi), Dat(KMn) des betreffenden Kundenmediums KM entnommenen Challenge respektive Kurvenpunkt c(KMi). Die Funktion KEY_VER erzeugt den symmetrischen Schlüssel

$$Key(KMi)=Mul(Priv(KV),c(KMi))=Priv(KV) \cdot RN \cdot g.$$

Gegebenenfalls erfolgt überdies eine Schlüsselwahl aufgrund der empfangenen Angaben zu den verwendeten Schlüsselversionen.

Im Schritt S17 entschlüsselt das Rechenzentrum RKV mittels der Funktion CIPH_DEC den aus der Antwortmeldung Dat(KM1), Dat(KMi), Dat(KMn) des betreffenden Kundenmediums KM entnommenen verschlüsselten Antwortmeldungsteil rCiph(KMi) mit dem erzeugten symmetrischen Schlüssel Key(KMi) des betreffenden Kundenmediums KM.

Im Schritt S18 entnimmt das Rechenzentrum RKV dem entschlüsselten Antwortmeldungsteil rCiph(KMi) des betreffenden Kundenmediums KM den Authentisierungsbeleg r(KMi), den öffentlichen Schlüssel Pub(KMi) und gegebenenfalls die Statusdaten Stat(KMi) des betreffenden Kundenmediums KM.

In einer Ausführungsvariante identifiziert das Rechenzentrum RKV im Schritt S19 das betreffende Kundenmedium KM respektive den zugehörigen Kunden durch Vergleichen des dem entschlüsselten Antwortmeldungsteil rCiph(KMi) entnommenen öffentlichen Schlüssels Pub(KMi) des betreffenden Kundenmediums KM mit den in der Kundendatenbank KDB gespeicherten öffentlichen Schlüsseln Pub(KMi) der Kundenmedien KM respektive zugeordneten Kundendaten.

Im Schritt S20 authentisiert das Rechenzentrum RKV das betreffende Kundenmedium KM respektive dessen authentische Erfassung mittels der Funktion AUT_VER. Die Funktion AUT_VER vergleicht dazu den dem entschlüsselten Antwortmeldungsteil rCiph(KMi) entnommenen Authentisierungsbeleg r(KMi) des betreffenden Kundenmediums KM mit einem Vergleichswert. Dieser Vergleichswert wird vom Rechenzentrum RVZ mittels Elliptischer Kurven Kryptographie aus dem im Schritt S14 erzeugten Hashwert h' und dem dem entschlüsselten Antwortmeldungsteil rCiph(KMi) entnommenen öffentlichen Schlüssel Pub(KMi) des betreffenden Kundenmediums KM erzeugt. Die Funktion AUT_VER erzeugt den Vergleichswert

$$r'(KMi)=Mul(h',Pub(KMi))=h' \cdot Priv(KMi) \cdot g.$$

Wenn dieser Vergleichswert mit dem aus dem entschlüsselten Antwortmeldungsteil rCiph(KMi) entnommenen Authentisierungsbeleg r(KMi) des betreffenden Kundenmediums KM übereinstimmt, ist die Authentisierung gelungen und damit bewiesen, dass das betreffende Kundenmedium KM authentisch erfasst wurde.

Der Authentisierungsbeleg r(KMi) und damit die Erfassung des Kundenmediums KM kann vom Rechenzentrum RKV nur dann verifiziert werden, wenn der symmetrische Schlüssel Key(KMi) vom berechtigten Kundenvertragspartner KV mit Hilfe seines privaten Schlüssels Priv(KV) gefunden wird. Damit wird implizit eine gegenseitige Authentisierung von Kundenmedium KM und Kundenvertragspartner KV realisiert.

Im Schritt S21 speichert das Rechenzentrum bei erfolgreicher Authentisierung die vom Bordrechner BR empfangenen Fahrtabschnittdaten Dat(BR) zugeordnet zum betreffenden Kundenmedium KM respektive Kunden.

Im Schritt S22 speichert das Rechenzentrum bei erfolgreicher Authentisierung gegebenenfalls die dem entschlüsselten Antwortmeldungsteil rCiph(KMi) entnommenen Statusdaten Stat(KM) zugeordnet zum betreffenden Kundenmedium KM respektive Kunden.

Abschliessend soll angeführt werden, dass in der Beschreibung zwar die Ausführung von Schritten in einer bestimmten Reihenfolge dargestellt wurde, dass der Fachmann jedoch verstehen wird, dass die Reihenfolge von mindestens gewissen Schritten geändert werden kann, ohne dabei vom Schutzgegenstand abzuweichen.

**Liste der verwendeten Bezugzeichen**

BR      Bordrechner
ES      Erfassungssystem
KDB    Kundendatenbank
KM     Kundenmedium
KV     Kundenvertragspartner
RKV    Rechenzentrum
RN     Zufallszahl, random number
VM     öffentliches Verkehrsmittel

**Liste der verwendeten Akronyme**

| | |
|---|---|
| AES | Advanced Encryption Standard |
| BIBO | Be In - Be Out |
| CICO | Check In - Check Out |
| ECC | Elliptischer Kurven Kryptographie Elliptic Curve Cryptography |
| GSM | Global System for Mobile Communication |
| NFC | Near Field Communication |
| UMTS | Universal Mobile Telecommunication System |

**Liste der zitierten Dokumente**

[1] EP 1 210 693 B1
«Verfahren und System zur Registrierung von Billetten» Siemens Transit Telematic Systems AG Industrieplatz 3, CH - 8212 Neuhausen

**Patentansprüche**

**1.** Verfahren zum Erfassen eines kundenspezifischen Bezugs von Dienstleistungen eines Dienstleistungssystems, umfassend:

- Erzeugen (S1) in einem Rechner (BR) des Dienstleistungssystems einer Aufforderungsmeldung (c(BR)) mittels Elliptischer Kurven Kryptographie basierend auf Dienstleistungsdaten (Dat(BR)) und funkbasiertes Aussenden (S2) der Aufforderungsmeldung (c(BR)) im Dienstleistungssystem,
- Empfangen (S3) der Aufforderungsmeldung (c(BR)) in Kundenmedien (KM) der Kunden im Dienstleistungssystem und Erzeugen (S4) jeweils in den Kundenmedien (KM) eines Authentisierungsbelegs (r(KM)) mittels der Elliptischen Kurven Kryptographie aus der Aufforderungsmeldung (c(BR)) und einem im Kundenmedium (KM) gespeicherten privaten Schlüssel (Priv(KM)),
- Erzeugen (S7) jeweils in den Kundenmedien (KM) eines symmetrischen Schlüssels (Key(KM)) mittels der Elliptischen Kurven Kryptographie aus einer Zufallszahl (RN) und einem öffentlichen Schlüssel (Pub(KV)) eines Kundenvertragspartners (KV),
- Erzeugen (S9) jeweils in den Kundenmedien (KM) einer Antwortmeldung (Dat(KM)), welche einen aus dem Authentisierungsbeleg (r(KM)) und einer Kundenidentifizierung erzeugten und mit dem symmetrischen Schlüssel (Key(KM)) verschlüsselten Antwortmeldungsteil (rCiph(KM)) und einen mittels der Elliptischen Kurven Kryptographie aus der Zufallszahl (RN) erzeugten (S6) Kurvenpunkt (c(KM)) umfasst, und Senden (S10) der Antwortmeldung (Dat(KM)) an den Rechner (BR), und
- Sammeln (S11) der Antwortmeldungen (Dat(KM1), Dat(KMi), Dat(KMn)) von den Kundenmedien (KM) im Rechner (BR) zur gemeinsamen Übermittlung an ein Rechenzentrum (RKV) des Kundenvertragspartners (KV).

**2.** Verfahren nach Anspruch 1, **dadurch gekennzeichnet, dass** der öffentliche Schlüssel (Pub(KV)) des Kundenvertragspartners (KV) mittels der Elliptischen Kurven Kryptographie aus einem privaten Schlüssel (Priv(KV)) des Kundenvertragspartners (KV) erzeugt wird, und dass im verschlüsselten Antwortmeldungsteil (rCiph(KM)) ein mittels der Elliptischen Kurven Kryptographie aus dem im Kundenmedium (KM) gespeicherten privaten Schlüssel (Priv(KM)) erzeugter öffentlicher Schlüssel (Pub(KM)) des Kundenmediums (KM) als Kundenidentifizierung verwendet wird.

**3.** Verfahren nach einem der Ansprüche 1 oder 2, **dadurch gekennzeichnet, dass** das Verfahren zudem umfasst: Empfangen (S13) der gesammelten Antwortmeldungen (Dat(KM1), Dat(KMi), Dat(KMn)) im Rechenzentrum (RKV) des Kundenvertragspartners (KV), und Erzeugen (S16) im Rechenzentrum (RKV) der symmetrischen Schlüssel (Key(KM)) der Kundenmedien (KM) jeweils mittels der Elliptischen Kurven Kryptographie aus einem im Rechenzentrum (RKV) gespeicherten privaten Schlüssel (Priv(KV)) des Kundenvertragspartners (KV) und dem in der Antwortmeldung (Dat(KM)) enthaltenen Kurvenpunkt (c(KM)) des Kundenmediums (KM).

**4.** Verfahren nach einem der Ansprüche 1 bis 3, **dadurch gekennzeichnet, dass** das Verfahren zudem umfasst:

Entschlüsseln (S17) im Rechenzentrum (RKV) der in den Antwortmeldungen (Dat(KM1), Dat(KMi), Dat(KMn)) enthaltenen verschlüsselten Antwortmeldungsteile (rCiph(KM)) der Kundenmedien (KM) jeweils mittels des symmetrischen Schlüssels (Key(KM) des Kundenmediums (KM).

5. Verfahren nach einem der Ansprüche 1 bis 4, **dadurch gekennzeichnet, dass** das Verfahren zudem umfasst: Übermitteln (S12) der Dienstleistungsdaten (Dat(BR)) vom Rechner (BR) zusammen mit den gesammelten Antwortmeldungen (Dat(KM1), Dat(KMi), Dat(KMn)) an das Rechenzentrum (RKV) des Kundenvertragspartners (KV), und Authentisieren (S20) der Kundenmedien (KM) im Rechenzentrum (RKV) jeweils durch Vergleichen des im verschlüsselten Antwortmeldungsteil (rCiph(KM)) des Kundenmediums (KM) enthaltenen Authentisierungsbelegs (r(KM)) mit einem mittels Elliptischer Kurven Kryptographie basierend auf den vom Rechner (BR) empfangenen Dienstleistungsdaten (Dat(BR)) und einem im verschlüsselten Antwortmeldungsteil (rCiph(KM)) des Kundenmediums (KM) enthaltenen öffentlichen Schlüssel (Pub(KM)) des Kundenmediums (KM) erzeugten Vergleichswert.

6. Verfahren nach einem der Ansprüche 1 bis 5, **dadurch gekennzeichnet, dass** das Verfahren zudem umfasst:

   - Identifizieren (S19) der Kundenmedien (KM) im Rechenzentrum (RKV) jeweils durch Vergleichen eines im verschlüsselten Antwortmeldungsteil (rCiph(KM)) des Kundenmediums (KM) enthaltenen öffentlichen Schlüssels (Pub(KM)) des Kundenmediums (KM) mit in einer Kundendatenbank (KDB) gespeicherten öffentlichen Schlüsseln (Pub(KM)) der Kundenmedien (KM), und
   - Zuordnen von vom Rechner (BR) empfangenen Fahrtabschnittdaten (Dat(BR)) zu einer durch den öffentlichen Schlüssel (Pub(KM)) des Kundenmediums (KM) bestimmten Kundenidentifizierung.

7. Verfahren nach einem der Ansprüche 1 bis 6, **dadurch gekennzeichnet, dass** der mit dem symmetrischen Schlüssel (Key(KM) verschlüsselte Antwortmeldungsteil (rCiph(KM)) zudem aus Statusdaten des Kundenmediums (KM) und einer Sequenznummer erzeugt wird, dass die Dienstleistungsdaten (Dat(BR)) eine Rechneridentifizierung, eine Dienstleistungsidentifizierung und aktuelle Zeitangaben umfassen, dass das Verfahren zudem die Erzeugung (SH) eines Hashwerts aus den Dienstleistungsdaten (Dat(BR)) umfasst, und dass die Aufforderungsmeldung (c(BR)) aus dem Hashwert der Dienstleistungsdaten (Dat(BR)) erzeugt wird.

8. Verfahren nach einem der Ansprüche 1 bis 7, **dadurch gekennzeichnet, dass** das Verfahren zum Erfassen einer kundenspezifischen Benutzung eines öffentlichen Verkehrsmittels vorgesehen ist, wobei das Dienstleistungssystem als öffentliches Verkehrsmittel ausgeführt ist, wobei der Rechner (BR) als Bordrechner (BR) im Verkehrsmittel ausgeführt ist, wobei die Aufforderungsmeldung (c(BR)) mittels Elliptischer Kurven Kryptographie basierend auf Fahrtabschnittdaten (Dat(BR)) erzeugt wird, wobei die Aufforderungsmeldung (c(BR)) im Verkehrsmittel ausgesendet wird, wobei die Aufforderungsmeldung (c(BR)) in Kundenmedien (KM) der Kunden im Verkehrsmittel empfangen wird, wobei die Antwortmeldung (Dat(KM)) an den Bordrechner (BR) gesendet wird, und wobei die Antwortmeldungen (Dat(KM1), Dat(KMi), Dat(KMn)) von den Kundenmedien (KM) im Bordrechner (BR) zur gemeinsamen Übermittlung an das Rechenzentrum (RKV) des Kundenvertragspartners (KV) gesammelt werden.

9. Tragbares elektronisches Kundenmedium (KM) zum Erfassen eines kundenspezifischen Bezugs von Dienstleistungen eines Dienstleistungssystems, wobei das Kundenmedium (KM) mit einem Kommunikationsmodul zum funkbasierten Datenaustausch mit einem Rechner (BR) des Dienstleistungssystems versehen ist und mindestens einen Prozessor umfasst, der programmiert ist die folgenden Schritte auszuführen:

   - Empfangen (S3) einer Aufforderungsmeldung (c(BR)) vom Rechner (BR) und Erzeugen (S4) eines Authentisierungsbelegs (r(KM)) mittels Elliptischer Kurven Kryptographie aus der Aufforderungsmeldung (c(BR)) und einem im Kundenmedium (KM) gespeicherten privaten Schlüssel (Priv(KM)),
   - Erzeugen (S7)) eines symmetrischen Schlüssels (Key(KM)) mittels der Elliptischen Kurven Kryptographie aus einer Zufallszahl (RN) und einem öffentlichen Schlüssel (Pub(KV)) eines Kundenvertragspartners (KV),
   - Erzeugen (S9) einer Antwortmeldung (Dat(KM)), welche einen aus dem Authentisierensbeleg (r(KM)) und einer Kundenidentifizierung erzeugten und mit dem symmetrischen Schlüssel (Key(KM) verschlüsselten Antwortmeldungsteil (rCiph(KM)) und einen mittels der Elliptischen Kurven Kryptographie aus der Zufallszahl (RN) erzeugten (S6) Kurvenpunkt (c(KM)) umfasst, und
   - Senden (S10) der Antwortmeldung (Dat(KM)) an den Rechner (BR).

10. Kundenmedium nach Anspruch 9, **dadurch gekennzeichnet, dass** der Prozessor überdies programmiert ist, im verschlüsselten Antwortmeldungsteil (rCiph(KM)) einen mittels der Elliptischen Kurven Kryptographie aus dem im Kundenmedium (KM) gespeicherten privaten Schlüssel (Priv(KM)) erzeugten öffentlichen Schlüssel (Pub(KM)) des Kundenmediums (KM) als Kundenidentifizierung zu verwenden, und den mit dem symmetrischen Schlüssel (Key(KM) verschlüsselten Antwortmeldungsteil (rCiph(KM)) zudem aus Statusdaten des Kundenmediums (KM) und einer Sequenznummer zu erzeugen.

**11.** Computerprogrammprodukt umfassend ein nicht-transientes computerlesbares Medium mit gespeichertem Computerprogrammcode, der eingerichtet ist, einen Prozessor eines mit einem Kommunikationsmodul zum funkbasierten Datenaustausch mit einem Rechner (BR) eines Dienstleistungssystems versehenen, tragbaren elektronischen Kundenmediums (KM) derart zu steuern, dass der Prozessor die folgenden Schritte ausführt:

- Empfangen (S3) einer Aufforderungsmeldung (c(BR)) vom Rechner (BR) und Erzeugen (S4) eines Authentisierungsbelegs (r(KM)) mittels Elliptischer Kurven Kryptographie aus der Aufforderungsmeldung (c(BR)) und einem im Kundenmedium (KM) gespeicherten privaten Schlüssel (Priv(KM)),
- Erzeugen (S7)) eines symmetrischen Schlüssels (Key(KM)) mittels der Elliptischen Kurven Kryptographie aus einer Zufallszahl (RN) und einem öffentlichen Schlüssel (Pub(KV)) eines Kundenvertragspartners (KV),
- Erzeugen (S9) einer Antwortmeldung (Dat(KM)), welche einen aus dem Authentisierensbeleg (r(KM)) und einer Kundenidentifizierung erzeugten und mit dem symmetrischen Schlüssel (Key(KM) verschlüsselten Antwortmeldungsteil (rCiph(KM)) und einen mittels der Elliptischen Kurven Kryptographie aus der Zufallszahl (RN) erzeugten (S6) Kurvenpunkt (c(KM)) umfasst, und
- Senden (S10) der Antwortmeldung (Dat(KM)) an den Rechner (BR).

**12.** Computersystem zum Erfassen eines kundenspezifischen Bezugs von Dienstleistungen eines Dienstleistungssystems, wobei das Computersystem mit einem Kommunikationssystem zum Datenaustausch mit mindestens einem Rechner (BR) des Dienstleistungssystems verbindbar ist, und einen gespeicherten privaten Schlüssel (Priv(KV)) eines Kundenvertragspartners (KV) und mindestens einen Prozessor umfasst, der programmiert ist die folgenden Schritte auszuführen:

- Erzeugen eines öffentlichen Schlüssels (Pub(KV)) des Kundenvertragspartners (KV) mittels Elliptischer Kurven Kryptographie aus dem privaten Schlüssel (Priv(KV)) des Kundenvertragspartners (KV),
- Empfangen vom Rechner (BR) von gesammelten Antwortmeldungen (Dat(KM1), Dat(KMi), Dat(KMn)) von Kundenmedien (KM) von Kunden des Dienstleistungssystems,
- Erzeugen (S16) von symmetrischen Schlüsseln (Key(KM)) der Kundenmedien (KM) jeweils mittels der Elliptischen Kurven Kryptographie aus dem gespeicherten privaten Schlüssel (Priv(KV)) des Kundenvertragspartners (KV) und einem in der Antwortmeldung (Dat(KM)) enthaltenen, mittels der Elliptischen Kurven Kryptographie aus einer Zufallszahl (RN) erzeugten (S6) Kurvenpunkt (c(KM)) des Kundenmediums (KM),
- Entschlüsseln (S17) von in den Antwortmeldungen (Dat(KM1), Dat(KMi), Dat(KMn)) enthaltenen verschlüsselten Antwortmeldungsteilen (rCiph(KM)) der Kundenmedien (KM) jeweils mittels des symmetrischen Schlüssels (Key(KM) des Kundenmediums (KM), und
- Authentisieren (S20) der Kundenmedien (KM) jeweils durch Vergleichen eines im Antwortmeldungsteil (rCiph(KM)) des Kundenmediums (KM) enthaltenen Authentisierungsbelegs (r(KM)) mit einem mittels Elliptischer Kurven Kryptographie basierend auf vom Rechner (BR) empfangenen Dienstleistungsdaten (Dat(BR)) und einem im Antwortmeldungsteil (rCiph(KM)) des Kundenmediums (KM) enthaltenen öffentlichen Schlüssel (Pub(KM)) des Kundenmediums (KM) erzeugten Vergleichswert.

**13.** Computersystem nach Anspruch 12, **dadurch gekennzeichnet, dass** der Prozessor überdies programmiert ist, die Kundenmedien (KM) jeweils durch Vergleichen eines im verschlüsselten Antwortmeldungsteil (rCiph(KM)) des Kundenmediums (KM) enthaltenen öffentlichen Schlüssels (Pub(KM)) des Kundenmediums (KM) mit in einer Kundendatenbank (KDB) gespeicherten öffentlichen Schlüsseln (Pub(KM)) der Kundenmedien (KM) zu vergleichen, und vom Rechner (BR) empfangene Dienstleistungsdaten (Dat(BR)) einer durch den öffentlichen Schlüssel (Pub(KM)) des Kundenmediums (KM) bestimmten Kundenidentifizierung zuzuordnen.

**14.** Rechner für ein Dienstleistungssystem zum Erfassen eines kundenspezifischen Bezugs von Dienstleistungen gemäss dem Verfahren nach einem der Ansprüche 1 bis 8, wobei der Rechner mit einem Kommunikationssystem zum funkbasierten Datenaustausch mit Kundenmedien von Kunden im Dienstleistungssystem versehen ist und mindestens einen Prozessor umfasst, der programmiert ist die folgenden Schritte auszuführen:

- Erzeugen (S1) einer Aufforderungsmeldung (c(BR)) mittels Elliptischer Kurven Kryptographie basierend auf Dienstleistungsdaten (Dat(BR)) und funkbasiertes Aussenden (S2) der Aufforderungsmeldung (c(BR)) im Dienstleistungssystem, und

- Sammeln (S11) von Antwortmeldungen (Dat(KM1), Dat(KMi), Dat(KMn)) von den Kundenmedien (KM) der Kunden im Dienstleistungssystem zur gemeinsamen Übermittlung an ein Rechenzentrum (RKV) eines Kundenvertragspartners (KV).

**15.** Rechner nach Anspruch 14, **dadurch gekennzeichnet, dass** der Rechner als Bordrechner (BR) in einem Verkehrsmittel angeordnet und zum Erfassen einer kundenspezifischen Benutzung des öffentlichen Verkehrsmittels ausgeführt ist, und dass der Prozessor überdies programmiert ist, in den Dienstleistungsdaten (Dat(BR)) Fahrtabschnittdaten (Dat(BR)) mit einer Bordrechneridentifizierung, einer Fahrtabschnittidentifizierung und einer aktuellen Zeitangabe einzufügen, aus den Fahrtabschnittdaten (Dat(BR)) einen Hashwert zu erzeugen, und die Aufforderungsmeldung (c(BR)) aus dem Hashwert der Fahrtabschnittdaten (Dat(BR)) zu erzeugen.

Fig. 1

Europäisches
Patentamt

European
Patent Office

Office européen
des brevets

## EUROPÄISCHER RECHERCHENBERICHT

Nummer der Anmeldung

EP 14 17 8390

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | EP 1 210 693 B1 (HAENI PROLECTRON AG [CH] SIEMENS TRANSIT TELEMATIC SYST [CH]) 22. Oktober 2003 (2003-10-22) * Absätze [0014], [0015]; Abbildung 5 * * Absätze [0021] - [0024] * ----- | 1-15 | INV. H04L9/08 G07B15/00 H04L9/30 H04L9/32 |
| Y | WO 2008/033590 A2 (VERISIGN INC [US]; ADLER JOSEPH A [US]; M RAIHI DAVID [US]) 20. März 2008 (2008-03-20) * Absätze [0046] - [0060]; Abbildungen 4A,4B * * Absätze [0072] - [0079]; Abbildung 6 * ----- | 1-15 | |
| A | EP 2 538 606 A1 (RESEARCH IN MOTION LTD [CA]) 26. Dezember 2012 (2012-12-26) * Absätze [0037], [0058] - [0072]; Abbildungen 4-6 * ----- | 1-15 | |
| A | GYGER T ET AL: "Easyride: active transponders for a fare collection system", IEEE MICRO, IEEE SERVICE CENTER, LOS ALAMITOS, CA, US, Bd. 21, Nr. 6, 1. November 2001 (2001-11-01), Seiten 36-42, XP002903801, ISSN: 0272-1732, DOI: 10.1109/40.977756 * das ganze Dokument * ----- | 1-15 | |

RECHERCHIERTE SACHGEBIETE (IPC)

H04L
G07B

Der vorliegende Recherchenbericht wurde für alle Patentansprüche erstellt

| Recherchenort | Abschlußdatum der Recherche | Prüfer |
|---|---|---|
| München | 15. Januar 2015 | Horbach, Christian |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
 Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 14 17 8390

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-01-2015

| Im Recherchenbericht angeführtes Patentdokument | Datum der Veröffentlichung | Mitglied(er) der Patentfamilie | Datum der Veröffentlichung |
|---|---|---|---|
| EP 1210693 B1 | 22-10-2003 | AT 252752 T | 15-11-2003 |
| | | BR 0011533 A | 07-05-2002 |
| | | CA 2384556 A1 | 22-03-2001 |
| | | DE 50004188 D1 | 27-11-2003 |
| | | DK 1210693 T3 | 16-02-2004 |
| | | EP 1210693 A1 | 05-06-2002 |
| | | ES 2204686 T3 | 01-05-2004 |
| | | JP 3806757 B2 | 09-08-2006 |
| | | JP 2003528364 A | 24-09-2003 |
| | | PT 1210693 E | 31-03-2004 |
| | | WO 0120557 A1 | 22-03-2001 |
| WO 2008033590 A2 | 20-03-2008 | AU 2007294624 A1 | 20-03-2008 |
| | | BR PI0712152 A2 | 22-02-2012 |
| | | CA 2652084 A1 | 20-03-2008 |
| | | CN 101529791 A | 09-09-2009 |
| | | EP 2027664 A2 | 25-02-2009 |
| | | JP 2009540703 A | 19-11-2009 |
| | | JP 2014075787 A | 24-04-2014 |
| | | KR 20090058496 A | 09-06-2009 |
| | | US 2008170695 A1 | 17-07-2008 |
| | | US 2014301551 A1 | 09-10-2014 |
| | | WO 2008033590 A2 | 20-03-2008 |
| EP 2538606 A1 | 26-12-2012 | CA 2780879 A1 | 21-12-2012 |
| | | EP 2538606 A1 | 26-12-2012 |
| | | US 2012331287 A1 | 27-12-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1210693 B1, Schrift